## Europäisches Patentamt

**European Patent Office**

**Office européen des brevets**

(11) Veröffentlichungsnummer: **0 393 452**

**A2**

(12) **EUROPÄISCHE PATENTANMELDUNG**

(21) Anmeldenummer: **90106718.1**

(22) Anmeldetag: **07.04.90**

(51) Int. Cl.⁵: **B60P 3/10**

(30) Priorität: **15.04.89 DE 3912484**

(43) Veröffentlichungstag der Anmeldung:
**24.10.90 Patentblatt 90/43**

(84) Benannte Vertragsstaaten:
**AT BE CH DK ES GR LI LU NL SE**

(71) Anmelder: **Wiens, Karl-Heinrich**
**Hauptstrasse 368**
**D-4817 Leopoldshöhe(DE)**

(72) Erfinder: **Wiens, Karl-Heinrich**
**Hauptstrasse 368**
**D-4817 Leopoldshöhe(DE)**

(74) Vertreter: **TER MEER - MÜLLER -**
**STEINMEISTER & PARTNER**
**Artur-Ladebeck-Strasse 51**
**D-4800 Bielefeld 1(DE)**

(54) **Bootsanhänger.**

(57) Ein Bootsanhänger mit einem Fahrgestell und einem Rahmen umfaßt zwei seitliche, aus einem Strangprofil bestehende Längsholme (10,12) und eine Anzahl von diese in Querrichtung verbindenden Traversen (14). Die Traversen sind mit den Längsholmen mit Hilfe von Verbindungsstücken (40) verbunden, die mit dem Profil der Längsholme (10,12) formschlüssig zusammenwirken.

Fig. 2

EP 0 393 452 A2

# BOOTSANHÄNGER

Die Erfindung betrifft einen Bootsanhänger mit einem Fahrgestell und einem Rahmen, der zwei seitliche, aus einem Strangprofil bestehende Längsholme und eine Anzahl von diese in Querrichtung verbindenden Traversen umfaßt, die mit den Längsholmen mit Hilfe von Verbindungsstükken verbunden sind.

Die Längsholme und die Traversen werden bei herkömmlichen Bootsanhängern dieser Art verschweißt oder genietet. Dadurch entsteht eine unlösbare Verbindung zwischen den Längsholmen und den Traversen, die es erforderlich macht, den Anhänger in bezug auf Größe und Form in allen Einzelheiten bereits beim Hersteller festzulegen. Wegen der sehr großen Zahl existierender Bootstypen und -formen wäre es jedoch durchaus wünschenswert, einen Bootsanhänger noch beim Händler oder sogar beim späteren Eigentümer verändern zu können. So könnte auf diese Weise etwa in Abhängigkeit von der zu erwartenden Belastung die Zahl der Traversen variiert oder die Lage der Traversen zur besonders günstigen Abstützung des Bootskiels verändert werden.

Sofern im übrigen die verwendeten Profile aus Aluminium bestehen, ist das Verschweißen außerordentlich schwierig, so daß es nur von geschulten und erfahrenen Mitarbeitern durchgeführt werden kann. Das Eloxieren kann nur nach dem Zusammenschweißen erfolgen, so daß ein entsprechend großes Bad erforderlich ist. Dies gilt in gleicher Weise für das Verzinken von Stahlprofilen.

Ein gattungsgemäßer Bootsanhänger ist aus der US-PS 3 974 924 zumindest insoweit bekannt, als er neben Traversen, die mit zwei Längsholmen fest verbunden sind, auch solche umfaßt, die in bezug auf die Längsholme in senkrechter Richtung verstellbar sind. Rechtwinklig abgewinkelte Endbereiche der Traversen sind in senkrecht gerichteten Hohlprofilabschnitten verschiebbar geführt, die ihrerseits mit den Längsholmen verschweißt sind. Die Höhenverstellung dient zur Einstellung der Position von Sliprollen und sonstigen Stützorganen zur Abstützung des Bootskiels.

Der Erfindung liegt die Aufgabe zugrunde, einen Bootsanhänger der gattungsgemäßen Art zu schaffen, der leicht und ohne erhöhte Fachkenntnisse montierbar und ohne Schwierigkeiten nach der Fertigstellung veränderbar ist.

Diese Aufgabe wird erfindungsgemäß dadurch gelöst, daß die Verbindungsstücke der Traversen mit dem Profil der Längsholme derart formschlüssig und lösbar zusammenwirken, daß eine Anbringung der Traversen in beliebigen Längspositionen der Längsholme möglich ist, und daß die Festlegung der Verbindungsstücke in der gewählten Längsposition lösbar durch Verklemmung mit Hilfen von Bolzen mit Muttern erfolgt.

Die Längsholme bestehen vorzugsweise aus einem I-Profil (Doppel-T-Profil), und die Verbindungsstücke greifen in eine der seitlichen Taschen des Profils ein und füllen diese im wesentlichen aus. Bei einer bevorzugten Ausführungsform weist der obere Quersteg des I-Profils auf der Unterseite eine Längsrippe (oder Längsnut) auf, die mit einer entsprechenden Ausnehmung (oder Rippe) an den Verbindungsstücken zusammenwirkt. Der untere Quersteg des I-Profils ist vorzugsweise verstärkt und weist eine hinterschnittene Nut auf, die von einem an den Verbindungsstücken vorgesehenen Flansch übergriffen wird und den Kopf eines Bolzens aufnimmt, der den Flansch des Verbindungsstücks in einer Bohrung durchdringt.

Bei einer derartigen Ausführung können sich die Traversen gegen nach unten gerichtete Kräfte, die die wesentliche Belastung darstellen, innerhalb der Tasche des I-Profils und vor allem auf dessen unterem Quersteg abstützen. Ein Herausrutschen aus der Tasche wird durch die obere Verbindung zwischen Nut und Rippe verhindert. Eine weitere Festlegung erfolgt mit Hilfe des Bolzens, der den Flansch des Verbindungsstücks an die Längsholme heranzieht.

Die hinterschnittene Nut befindet sich vorzugsweise an der Unterseite des unteren Querstegs des I-Profils, und der Flansch des Verbindungsstücks greift entsprechend unter den Längsholm.

Die Verbindungsstücke weisen vorzugsweise auf der den Traversen zugewandten Seite einen durch eine Schulter begrenzten Schaftabschnitt auf, auf den die als Hohlprofil ausgebildeten Traversen aufschiebbar sind.

Der obere Quersteg des I-Profils kann auf der Oberseite ebenfalls eine hinterschnittene Längsnut aufweisen, in die Stegprofile mit entsprechend profilierten unteren Rändern eingeschoben werden können. Diese Stegprofile weisen ebensolche profilierten Ränder auf der oberen Seite auf, die in eine Längsnut eines über die Längsholme hinweg verlaufenden Verstärkungsprofils eingreifen. Derartige Verstärkungsprofile werden verwendet, wenn eine höhere Tragfähigkeit des Bootsanhängers erreicht werden soll.

Der erfindungsgemäße Bootsanhänger erfordert daher keinerlei Schweißarbeiten. Er kann nach dem Baukastensystem zusammengesetzt werden, so daß sowohl verschienen Bootsgrößen als auch verschiedenen Gewichtsbelastungen Rechnung getragen werden kann. Zusatzteile können nachträglich oder auch unmittelbar an dem Profil der Längsholme durch Verschrauben angebracht werden. Dies gilt sowohl für das Fahrgestell bzw. dessen Achsen als auch für Zusatzteile im eigentlichen Sinne, etwa einen Reserveradhalter, einen Schutzblechhalter, eine Anhängerkupplung in Verbindung mit einem Auflaufbremskopf, ein Stützrad, Bootsstützen etc.

Im folgenden werden bevorzugte Ausführungsbeispiele der Erfindung anhand der beigefügten Zeichnung näher erläutert.

Fig. 1 ist eine perspektivische Teildarstellung des Rahmens eines Bootsanhängers unter Fortlassung hier nicht interessierender Teile;

Fig. 2 ist ein Schnitt durch einen Längsholm mit Verstärkungsprofil und angesetztem Verbindungstück;

Fig. 3 entspricht Fig. 2, zeigt jedoch eine andere Ausführungsform des Verbindungsstücks.

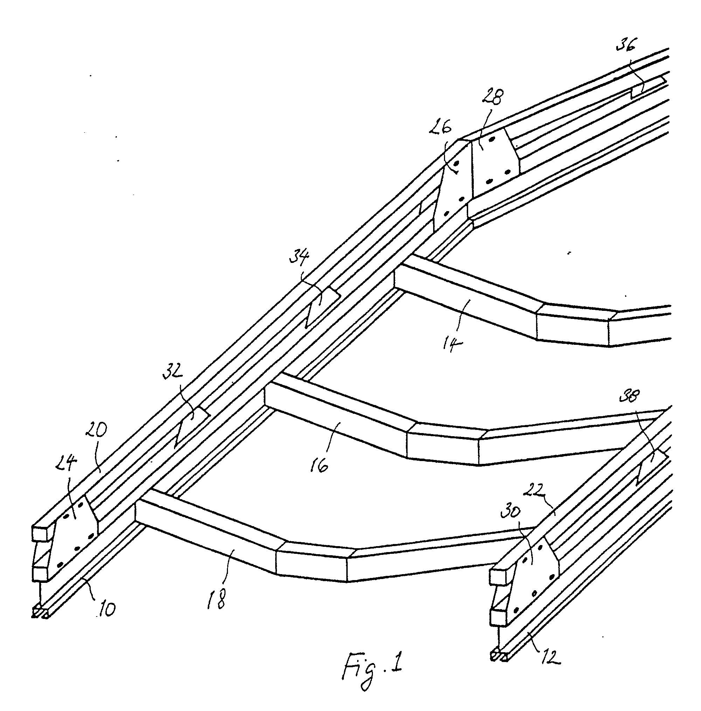

Figur 1 zeigt nur die wesentlichen Teile des Aufbaus eines Bootsanhängers, und zwar vor allem zwei an den Längsseiten liegende Längsholme 10,12, die durch eine Anzahl von Traversen 14,16,18 miteinander verbunden sind. Die Längsholme sind in nur angedeuteter Weise im vorderen Bereich des Bootsanhängers spitzwinklig zu einer Deichsel zusammengeführt. Im dargestellten Beispiel sind die insgesamt als I-Profil ausgebildeten Längsholme durch ein über die Längsholme hinweg verlaufendes Verstärkungsprofil 20,22 verstärkt. An den Enden der einzelnen Profilabschnitte sind diese durch Verbindungsbleche 24,26,28,30 miteinander verbunden. Im übrigen stehen die Längsholme 10,12 und die Verstärkungsprofile 20,22 über Stegprofile 32,34,36,38 miteinander in Verbindung, auf die später genauer eingegangen werden soll. Die Traversen 14,16,18 sind in bekannter Weise nach unten durchgewölbt und bestehen aus einem kastenförmigen Hohlprofil.

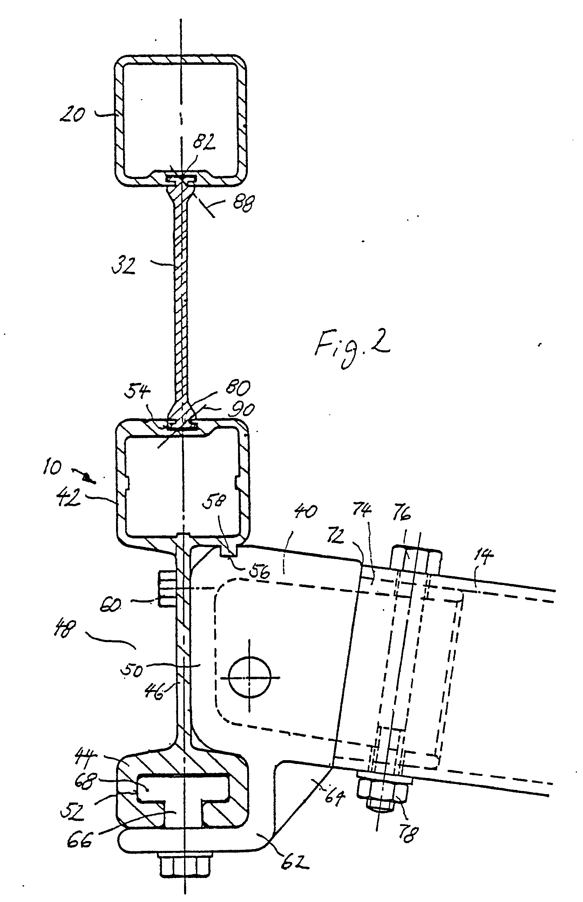

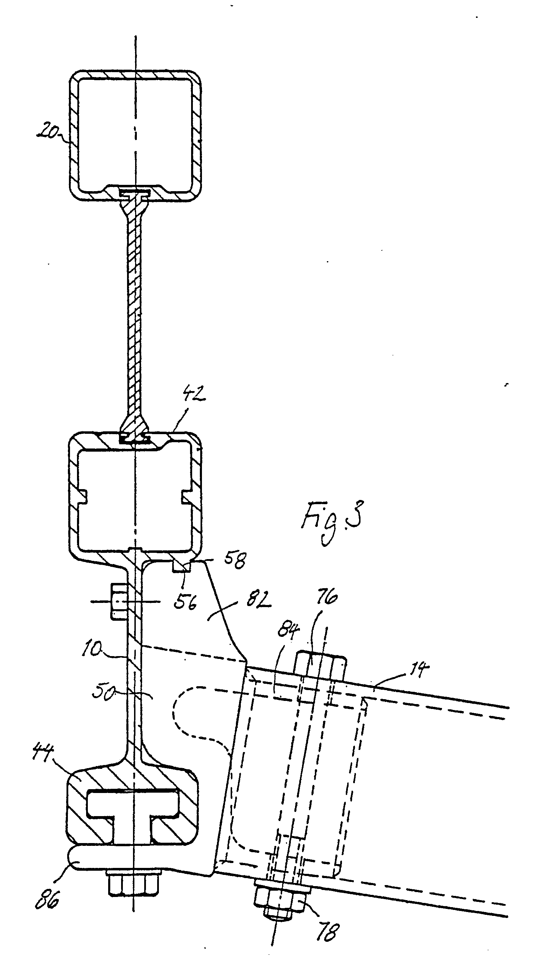

Anschließend soll zur näheren Erläuterung der Erfindung auf Figuren 2 und 3 Bezug genommen werden.

Figur 2 zeigt im Querschnitt einen Längsholm 10, über diesem ein Verstärkungsprofil 20, ein Stegprofil 32, das beide miteinander verbindet, und darüber hinaus ein Verbindungstück 40 gemäß der vorliegenden Erfindung. Der Längsholm 10 besteht aus einem Profil, das insgesamt als I-Profil bezeichnet werden kann und einen oberen Quersteg 42, einen unteren Quersteg 44 und einen senkrechten Verbindungssteg 46 umfaßt. Durch diese Querschnittsform entstehen auf beiden Seiten des Verbindungssteges 46 eingezogene Taschen 48,50.

Der untere Quersteg 44 ist verstärkt und nimmt eine von unten eintretende, im Querschnitt T-förmige Nut 52 auf. Der obere Quersteg 42 ist ebenfalls verstärkt und als kastenförmiges Hohlprofil ausgebildet. Auf seiner Oberseite befindet sich eine ebenfalls im Querschnitt T-förmige Nut 54, deren Abmessungen jedoch wesentlich geringer sind als diejenigen der Nut 52. Auf der Unterseite des oberen Querstegs 42 befindet sich auf der rechten Seite in Figur 2 eine über die Profillänge durchlaufende Rippe 56, die in die dort gebildete Tasche 50 hineinragt.

Das Verbindungstück 40 ist beispielsweise ein Gußstück. Es tritt in die Tasche 50 ein und füllt diese im wesentlichen aus. Es weist auf der oberen Seite eine Ausnehmung 58 auf, deren Position und Dimensionierung der Rippe 56 entspricht, so daß durch Zusammenwirken der Rippe 56 und der Ausnehmung 58 ein seitliches Herausrutschen des Verbindungsstücks 40 aus der Tasche 50 verhindert wird. Eine Halteschraube 60 kann zusätzlich durch den Verbindungssteg 46 hindurch in das Verbindungstück 40 eingeschraubt werden, jedoch ist diese Schraube nicht zwingend erforderlich.

Ein abgewinkelter Flansch 62 erstreckt sich von dem Verbindungstück 40 aus zunächst entlang der Seite des unteren Querstegs 44 nach unten und sodann unter den unteren Quersteg 44 über die Nut 52 hinweg. Der senkrecht verlaufende Abschnitt des Flansches 62 stützt sich zusätzlich durch eine dreieckige Rippe 64 am Verbindungsstück 40 ab. In der Nut 52 des unteren Quersteges 44 liegt ein Bolzen 66 mit T-förmigem, im Querschnitt rechteckigem Kopf 68, der unverdrehbar, jedoch längsverschiebbar in der Nut 52 liegt. Der Bolzen durchdringt den waagerechten Abschnitt des Flansches 62 in einer nicht gezeigten Bohrung und nimmt unterhalb des Flansches eine Mutter 70 auf. Durch Anziehen der Mutter 70 wird das Verbindungstück 40 nicht nur zusätzlich gegen Austreten aus der Tasche 50 gesichert, sondern das Verbindungstück 40 wird zugleich in Längsrichtung des Längsholmes durch Klemmwirkung zwischen dem Kopf 68 des Bolzens 66 und der Mutter 70 festgelegt.

Eine in Figur 2 gezeigte Bohrung in dem Verbindungstück, die parallel zu dem Längsholm verläuft, dient zur Durchführung von Kabeln für die Beleuchtung des Bootsanhängers.

Das Verbindungstück 40 ist nach rechts in Figur 2, also zur Mitte des Bootsanhängers hin, leicht abwärts geneigt. Es geht dort über eine Schulter 72 in einen nur gestrichelt angedeuten Schaftabschnitt 74 über, dessen Außenkontur der Innenkontur der als Hohlprofil ausgebildeten Traversen 14 entspricht. Die Traversen können daher mit ihren Endbereichen auf den Schaftabschnitt 74 aufgeschoben werden. Zur Festlegung dient eine Schraube 76 mit Mutter 78.

Die Nut 52 des unteren Querstegs 44 muß nicht nowendigerweise nach unten offen sein. Sie kann beispielsweise auch nach rechts in Figur 2 geöffnet sein. Die Nut 52 ist zusätzlich verwendbar zur Befestigung der Achsen eines nicht gezeigten Fahrgestells, eines Reserveradhalters oder anderer Zusatzteile.

In die Nut 54, die sich in der Längsmittellinie der Oberseite des oberen Quersteges 42 befindet, ist das Stegprofil 32 in Längsrichtung eingeschoben, dessen unterer Rand 80 als korrespondieres T-Profil ausgebildet ist. Dies gilt auch für den oberen Rand 82 des Stegprofils 32, der in eine entsprechende, T-förmige Nut an der Unterseite des kastenförmigen Verstärkungsprofils 20 eingreift.

Alle hier geschilderten Verbindungen zwischen dem Längsholm 10, dem Stegprofil 32, dem Verstärkungsprofil 20, dem Verbindungsstück 40 und der Traverse 14 erfordern keinerlei Schweißvorgänge. Sie können daher ohne geschul tes Personal hergestellt und gegebenenfalls auch später hinzugfügt oder verändert werden.

Figur 3 zeigt eine Ausführungsform, bei der der Längsholm 10 und das Verstärkungsprofil 20 mit der Darstellung der Figur 2 übereinstimmen und nur das Verbindungsstück, das hier mit 82 bezeichnet ist, verändert ist, so daß nur dieses erneut beschrieben werden soll. Der wesentliche Unterschied besteht darin, daß bei der Ausführungsform gemäß Figur 3 der mit 84 bezeichnete Schaftabschnitt zur Aufnahme der Traverse 14 nach unten abgesenkt ist. Auf diese Weise erstreckt sich der mit 86 bezeichnete Flansch des Verbindungsstücks 82 im wesentlichen waagerecht unter den unteren Quersteg 44 des Längsholms 10. Die Befestigung erfolgt in der bereits beschriebenen Weise.

Das Profil der Längsholme 10,12 und die Form des Verbindungsstücks 40,82 kann in erheblichem Umfange abgewandelt werden. Als wichtiger Gesichtspunkt wird vor allem angesehen, daß das Verbindungstück in bezug auf das Profil der Längsholme eine Form aufweist, daß die im Vordergrund stehenden, senkrecht nach unten gerichteten Kräften durch formschlüssiges Zusammenwirken, etwa durch Eingreifen in die Tasche 50, aufgefangen werden können. Ferner ist es notwendig, durch geeignete Profilierung, wie etwa die Rippe 56 und die Ausnehmung 58 an der Oberseite des Verbindungsstücks ein seitliches Herausrutschen oder Herauskippen des Verbindungsstücks zu verhindern. Die Position von Rippe und Ausnehmung kann spiegelbildlich angeordnet oder auch anders gestaltet sein. Schließlich ist es notwendig, eine Sicherung gegen Verschiebungen in Längsrichtung vorzunehmen. Zu diesem Zweck wird eine Nut im unteren Quersteg 44 in Verbindung mit dem Flansch 62,86 als wesentliches Merkmal angesehen. Die Nut kann jedoch, wie bereits erwähnt, auch an der Seite des unteren Querstegs liegen. Sie kann einen in anderer Weise hinterschnittenen Querschnitt aufweisen. In Figur 2 sind durch strichpunktierte Linien 88,90 Stifte angedeutet, die in entsprechende Bohrungen eingeschlagen werden können, die das Stegprofil 32 und das obere Verstärkungsprofil 20 bzw. den oberen Quersteg 42 des Längsholms 10 fluchtend durchdringen. Sofern die Verbindung wieder gelöst werden soll, können die Stifte nach innen in das jeweilige Profil hineingeschlagen werden.

Es wurde bereits darauf hingewiesen, daß die Ausnehmung 58 und die Rippe 56, die das Verbindungsstück 40 im oberen Bereich festhalten, auch in ihrer An ordnung vertauscht werden können. Darüber hinaus besteht die Möglichkeit eines anderweitigen formschlüssigen Zusammenwirkens zwischen dem oberen Quersteg 42 und dem oberen Bereich des Verbindungsstücks 40, etwa mit Hilfe einer hinterschnittenen Nut oder Rippe auf der rechts in Figur 2 und 3 gezeigten Außenseite des Querstegs und einer entsprechenden Nut oder Rippe im Verbindungsstück.

## Ansprüche

1. Bootsanhänger mit einem Fahrgestell und einem Rahmen, der zwei seitliche, aus einem Strangprofil bestehende Längsholme und eine Anzahl von diese in Querrichtung verbindenden Traversen umfaßt, die mit den Längsholmen mit Hilfe von Verbindungsstücken verbunden sind, dadurch **gekennzeichnet**, daß die Verbindungsstücke (40,82) der Traversen (14) mit dem Profil der Längsholme (10,12) derart formschlüssig und lösbar zusammenwirken, daß eine Anbringung der Traversen in beliebigen Längspositionen der Längsholme möglich ist, und daß die Festlegung der Verbindungsstücke (40,42) in der gewählten Längsposition lösbar durch Verklemmung mit Hilfen von Bolzen mit Muttern (66,70) erfolgt.

2. Bootsanhänger nach Anspruch 1, dadurch **gekennzeichnet**, daß das Strangprofil der Längsholme (10,12) ein stehend angeordnetes I-Profil ist und daß die Verbindungsstücke (40,82) in eine der seitlichen Taschen (48,50) des I-Profils eintreten und diese im wesentlichen ausfüllen.

3. Bootsanhänger nach Anspruch 2, dadurch **gekennzeichnet**, daß der obere Quersteg (42) des I-Profils auf der Unterseite eine längsgerichtete Rippe (56) aufweist und daß das Verbindungsstück (40,82) mit einer entsprechenden Ausnehmung (58) versehen ist.

4. Bootsanhänger nach Anspruch 2 oder 3, dadurch **gekennzeichnet**, daß der untere Quersteg (44) des I-Profils verstärkt ist und eine hinterschnittene Nut (52) aufnimmt, die von einem an dem Verbindungsstück vorgesehenen Flansch (62,86) übergriffen wird und den Kopf (68) des Bolzens (66) aufnimmt, der den Flansch der Verbindungsstücke in der Bohrung durchdringt.

5. Bootsanhänger nach Anspruch 4, dadurch

gekennzeichnet, daß die Nut (52) des unteren Querstegs (44) und der Kopf (68) des Bolzens einen T-förmigen Querschnitt aufweisen.

6. Bootsanhänger nach Anspruch 4 oder 5, dadurch gekennzeichnet, daß die Nut (52) an der Unterseite des unteren Querstegs (44) des Längsholms angeordnet ist und daß der Flansch (62,86) unter den unteren Quersteg (44) greift.

7. Bootsanhänger nach einem der vorhergehenden Ansprüche, dadurch gekennzeichnet, daß die Verbindungsstücke (40,82) auf der der Traverse zugewandten Seite einen durch eine Schulter (72) begrenzten Schaftabschnitt (84) aufweisen, auf den die als Hohlprofil ausgebildeten Traversen (14) aufschiebbar sind.

8. Bootsanhänger nach Anspruch 7, dadurch gekennzeichnet, daß der Schaftabschnitt (74) und die Traverse (14) mit Hilfe einer beide durchdringenden Schraube (76) in bezug aufeinander festgelegt sind.

9. Bootsanhänger nach einem der Ansprüche 2 bis 8, dadurch gekennzeichnet, daß der obere Quersteg (42) des I-Profils der Längsholme auf der Oberseite eine hinterschnittene, längsgerichtete Nut (54) aufweist, in die Stegprofile (32) mit entsprechend profiliertem unterem Rand (80) eingeschoben sind, die mit einem ebensolchen oberen Rand (82) in eine hinterschnittene Nut eines über die seitlichen Längsholme (10,12) hinweg verlaufenden Verstärkungsprofils (20) eingreifen.

10. Bootsanhänger nach einem der Ansprüche 2 bis 9, dadurch gekennzeichnet, daß der obere Quersteg (42) des I-Profils der Längsholme als kastenförmiges Hohlprofil ausgebildet ist.

Fig.1

Fig.2

EP 0 393 452 A2

Fig. 3